# EUROPEAN PATENT SPECIFICATION

(11) **EP 2 523 572 B1**
(45) Date of publication and mention of the grant of the patent: **20.03.2019**
(21) Application number: 11733150.4
(22) Date of filing: 11.01.2011
(51) Int. Cl.: A42B 3/06, F41H 1/04, B32B 27/12, B32B 5/02, B32B 5/24, B32B 5/26, B32B 7/12, F41H 5/04, F41H 5/007, F41H 1/02

(54) **HELMET WITH AN INTERMEDIATE LAYER OF FRICTION DECREASING MATERIAL**
HELM MIT ZWISCHENSCHICHT AUS REIBUNGSMINDERNDEM MATERIAL
CASQUE AVEC COUCHE INTERMÉDIAIRE EN MATÉRIAU RÉDUISANT LA FRICTION

(30) Priority: 03.09.2010 SE 1050905; 13.01.2010 SE 1000031
(43) Date of publication of application: 21.11.2012
(73) Proprietor: Mips AB, 18236 Danderyd (SE)
(72) Inventor: HALLDIN, Peter, S-12263 Enskede (SE); BERGNER, Anders, S-Halmstad 30293 (SE); GRINNEBACK, Kay, S-Kungälv 44231 (SE)
(74) Representative: J A Kemp
(86) International application number: PCT/SE2011/050020
(87) International publication number: WO 2011/087435

(56) References cited:
- EP-A1- 0 188 747
- WO-A1-2006/041355
- WO-A1-2006/041355
- WO-A1-2008/046196
- WO-A1-2009/040610
- US-A- 3 320 619
- US-A1- 2004 250 340
- US-A1- 2004 250 340

## Description

### Technical field

The present invention relates generally to a helmet with a layer of friction decreasing material adapted to be placed between two layers to create a sliding movement between the layers when an oblique force component is applied to at least one of the layers.

### Background art

It is a problem to create a structure absorbing energy at oblique impacts generating tangential force components created by for example an impact between a person and a moving object or surface.

In prior art WO2004/032659, a load diverting helmet with an intermediate layer is presented. The intermediate layer is disposed between inner and outer helmet layers. The intermediate layer allows the outer helmet layer to displace with respect to the inner helmet layer, thereby absorbing rotational energy created by oblique impacts to the helmet. The intermediate layer consists in this application of one or several layers of a thin folio with or without a hyper elastic material in between. These layers are expensive and difficult to shape into the required design.

US 2004/250340 A1 discloses a helmet comprising inner and outer layers attached so as to permit functional sliding between the layers.

### Summary of invention

An object of the present invention is to create a helmet with an intermediate layer of a material which decreases friction between two slideable layers in order to absorb rotational energy, for example caused by oblique impacts having a tangential force component. The intermediate layer shall be cost efficient to produce and handle and shall also be easily shaped to fit the sliding layers.

The present invention is defined by the appended claims. By using fibers as a friction decreasing material the friction between the layers can be decreased. Further, the fibers are easily formed and can be adapted to be placed between a great range of moveable layer designs.

In one embodiment of the invention some or all of the fibers in the intermediate layer are natural fibers. Natural fibers are environmental friendly and reusable.

In another embodiment of the invention some or all of the fibers in the intermediate layer are polymer based. Polymer based fibers are commercially practicable and cost efficient. It is also possible to use a great number of different polymer based materials. Other types of fiber materials are of course also possible, such as for example glass, basalt, carbon fiber etc.

In a further embodiment the polymer based fibers are thermoplastic. The thermoplastic fibers have a varying melting temperature and may have a very low friction.

According to the invention, order to decrease the friction between the fibers even further, in one embodiment the fibers are treated with a low friction material, wherein the low friction material is a silicon- or fluoro- polymer.

The appearance of the fibers may vary, in one embodiment the fibers have a circular cross section and in one embodiment the fibers have a cross section with a height smaller that its width, i.e they have a flat appearance. Fibers with a circular cross section can easily be brought into rolling, thus decreasing the friction.
Fibers with a flat appearance have instead a high pressure resistance due to a larger pressure force contact surface.

In further embodiments the fibers are bound together to stabilize the fiber material. Either they are bound together by web forming creating a loosely held together sheet structure. The web forming step can be done by a wet laying or dry laying process creating a non-woven material, such as for example a wad or a carded felt. The non-woven material may further be processed by web bonding such as latex resin bonding, solvent bonding, mechanical bonding- such as needle punching or stitch bonding, ultrasonic bonding, heat bonding or spund lacing. The way of shaping the material depends on the fiber materials used and can be made by different bonding processes. In possible embodiments the shaped fibers mats may also be glued, impregnated or welded together. When the fibers are welded together they can be welded by heat, ultrasound, friction, radio frequency or by a hot surface. The welding can be performed in dots or in lines with a diameter/width of approximately 0,5-15 mm.

In another embodiment of the invention a support layer is added to one or both sides of the intermediate layer. The support layer is bonded to the intermediate layer, for example by heat and/or an adhesive of any kind, creating an intermediate layer with clearly defined outer surfaces which easily can be handled and shaped. If the support layer is precut before it is attached to the intermediate layer, it can also be draped over any surface. The support layer can be a spun bond layer, a thermoplastic folio, a foam material or others.

In a further embodiment the intermediate layer is attached to either one of the movable layers by an adhesive, such as glue, tape, christmastrees, needles, pins or barbers. This simplifies the handling and manufacturing process by fixing the intermediate layer into place.

In order to further fix the intermediate layer into place it may also be attached to both of the movable layers at a peripheral edge of the intermediate layer. Preferably, the attachment is made at a part of the structure where the probability of an application of an outer force is low.

In another embodiment, adapted to absorb even greater tangential forces, bonds in the intermediate layer or between either one of the movable layers and the intermediate layer are adapted to break at a certain tangential force. By having bonds adapted to break at a certain tangential force the structure comprising the two moveable layers and the intermediate layer is able to absorb more energy in the tangential direction.

In another embodiment of the invention, the movable layers can be described as an inner and an outer layer. At least one of the layers is covering or can be brought to contact with a body part. In this embodiment, the intermediate layer between the moving inner and outer layer is adapted to prevent body parts from being exposed to too high tangential forces by moving the outer layer relative the inner layer.

In further embodiments, the intermediate layer is used between an outer and an inner layer in a helmet, between an outer and an inner layer in protection devices and/or protection clothing or is used between an outer and an inner layer covering a part, parts or an entire interior of a craft moving on land, in water or in the air.

Please note that all the embodiments or features of an embodiment could be combined in any way if such combination is not clearly contradictory. All examples shall also be regarded merely as examples and the invention is not limited to these. Brief description of drawings

The invention is now described, by way of example, with reference to the accompanying drawings, in which:
Fig. 1 discloses an intermediate layer according to the invention placed between two layers which are able to slide,
Fig. 1a and 1b discloses two embodiments of different fiber types,
Fig. 2 discloses one possible production method for the friction decreasing layer consisting of fibers forming an intermediate layer,
Fig. 3 discloses a first method of forming the friction decreasing layer to fit a partly spherical object,
Fig. 4 discloses a second method of forming the friction decreasing layer to fit a partly spherical object,
Fig. 5 discloses a third method of forming the friction decreasing layer to fit a partly spherical object,
Fig. 6a-6d discloses cut views of different diagrammatical embodiments of a helmet with the inventive friction decreasing layer, and

### Description of embodiments

In the following, a detailed description of different embodiments of the invention is disclosed.

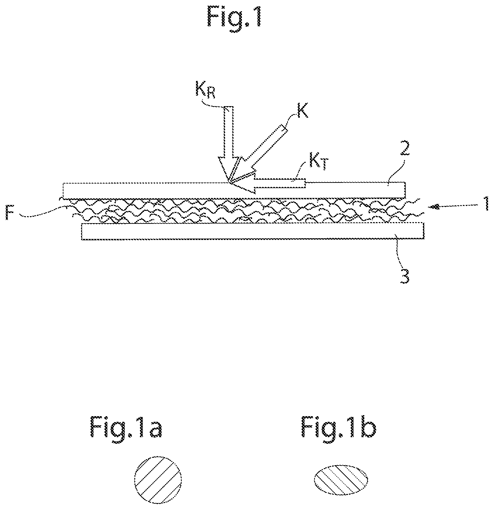

Figure 1 discloses the inventive intermediate layer 1 of friction decreasing material in its most general form. The intermediate layer 1 is placed between two layers 2, 3 which are able to slide in relation to each other. The sliding movement between the layers 2, 3 is created when a force K is applied and a tangential force component K_{T} shears the layers.

The friction decreasing material comprises fibers F, preferably natural or polymer based fibers or a mix thereof. The fibers F might also be treated with a low friction material of any kind. The fibers F can also have a circular cross section, see figure 1b, or a cross section with a height smaller that its width, see figure 1c.

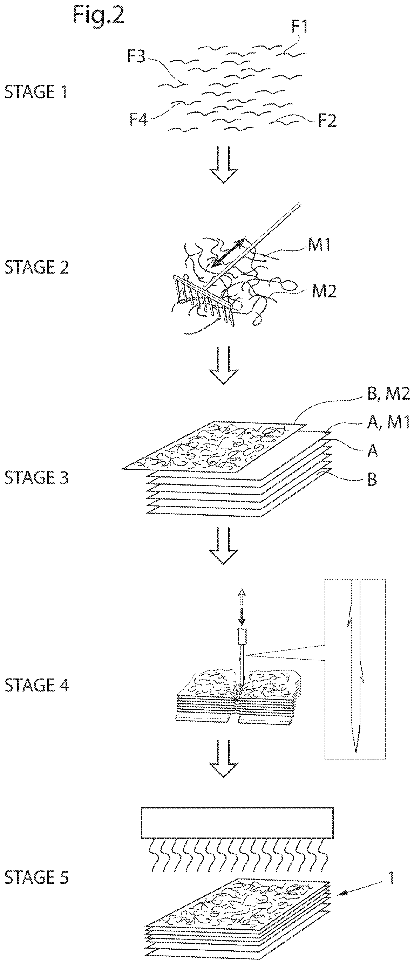

In figure 2 it is disclosed a possible production method for the layer of friction decreasing material in the form a fabric layer comprising fibers of different kind F1, F2, F3, F4. The fibers can be natural fibers, polymer based thermoplastic fibers or other fibers. The fibers F1, F2, F3, F4 are delivered to a first stage of a process occurring in a production assembly in a first and second kind or mix M1, M2 of the different fibers.

One way to get at stable fabric layer is by web forming using a dry laying process creating a non-woven material with a loosely held together sheet structure. The sheet structure, as described in figure 2, may include at least two layers, an intermediate layer A and a support layer B, where each layer consists of several laminas. However, it is also possible to create a stable fabric layer by web forming using only the intermediate layer A with a first mix of fibre M1. Thus, to create stable fabric consisting of several layers with only one fibre mix.

In figure 2, layer A could consist of several layers of the first mix of fibers M1 and layer B of several layers of the second mix of fibers M2. In one embodiment, the layers A and B can include layers with the following mix of fibers:
Layer A: 95% Siliconized Polyester + 5% Polyester
Layer B: 50% Bi-Component Polyester + 50% Polyester

Using 50% polyester in the support layer B makes it possible to heat form the fabric into a stabilization surface. The support layer B can also be a spun bond layer or a thermoplastic folio. The intermediate layer A is a low friction layer comprising fibers, here exemplified with a siliconized polyester fiber. Of course, it is also possible to use other type of mixtures for the fibres. Other mixtures can for example be 75-100% siliconized PET and 0-25% standard PET or other fibre or 10-70% bicomponent fiber, such as. PET/coPET and 90-30% standard PET or other fibre. The fibers are not limited to bonding fibres based on PET.

Each layer A, B of the non-woven material is in stage 2 of the process further processed by web bonding forming a web sheet, for example by carding. Carding is especially used when forming fibers with low friction, like siliconized polyester fibers, to a web. The web forming could also be solved by methods like melt blowing, air laying or spun melting.

In stage 3 of the process the layers of web sheets are then piled up, overlaying each other, by cross-lapping or any other method.

In stage 4 the different layers are bonded together by needle punching. In the needle punching process, needles with several small barbs are punched through both layers. On their way through the web, the needles are bringing separate fibers from each layer with them and the separate fibers are used as thread.

In stage 5 thermo-bonding is used to finalize the bonding between the layers and to create the stabilization surface and the final sheet-form 1 of the layer to be used as friction decreasing layer/intermediate layer.

It shall be noted that all or separate stages in the above described process can be used when producing the layer of friction decreasing material.

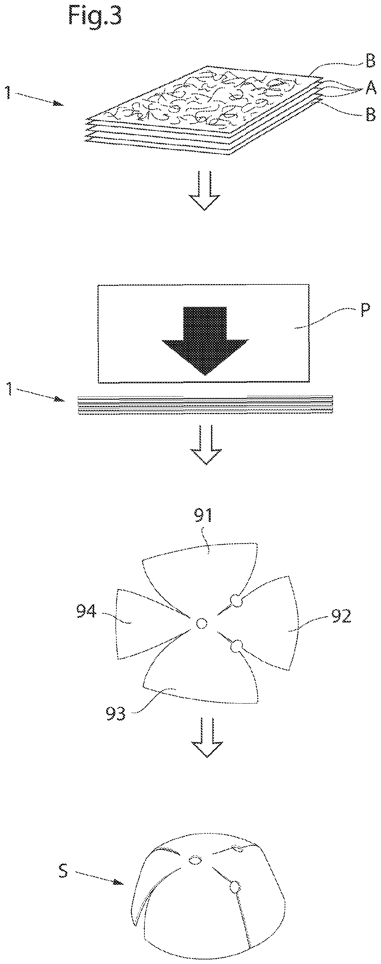

In figure 3 it is disclosed a first possible method on how to form the friction decreasing layer having the final sheet-form 1 comprising stable layers A, B of fiber fabric to fit a partly spherical object S, such as for example a helmet. The flat sheet 1 is preferably placed in a die-cutting device P which die-cuts a pattern in the sheet. The pattern has the form of a bulging cross with at least four arms a1-a4 and is designed to fit over the partly spherical surface. It is also possible to use a pattern in the form of a flower with less or more than four arms or other patterns adaptable to be draped over or inside a hollow at least partly spherical object S.

When draped over or inside the partly spherical object S the edges of each arm a1-a4 are brought into contact or close to contact with each other, with or without an overlap of the arms, thus fully or partly covering the partly spherical surface.

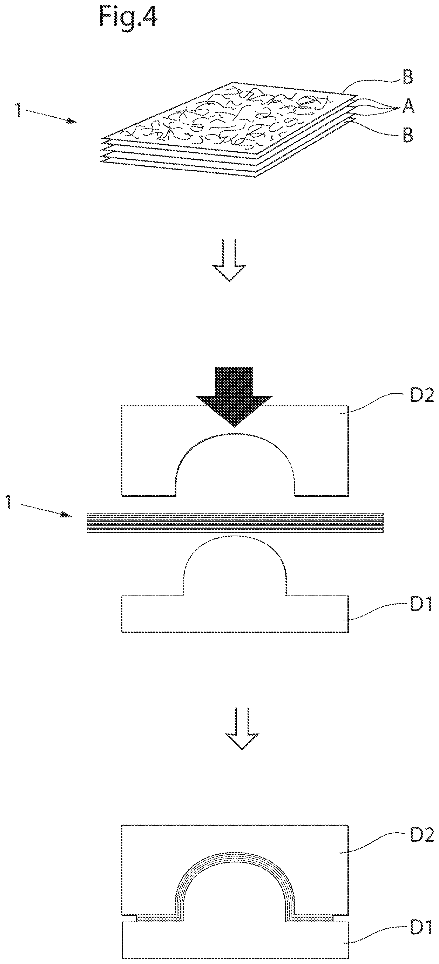

In figure 4 it is disclosed a second method of forming the friction decreasing sheet to fit a partly spherical object S. Here a three-dimensional spherical shape is directly created of the sheet. In order to be able to form the sheet a certain amount of heat sensitive fibers must be included in the sheet. Preferably a support layer B is added to one or both sides of the intermediate layer A. The sheet is then, for a predetermined time, placed in or over a partly spherical first die D1 and is pressed in place by a second spherical die D2 which can be heated into a certain temperature. The complete die with its two die parts D1, D2 can also be inserted into an oven or placed under a heat source. The temperature shall be high enough to melt some of the heat sensitive fibers, for example a temperature of 120 °C, and the moulding time can be approximately 1 minute. Thus, a three-dimensional spherical shape is created out of the flat sheet by a thermo forming process. The three dimensional moulding is preferably using sheets that have not been heat treated (for bonding).

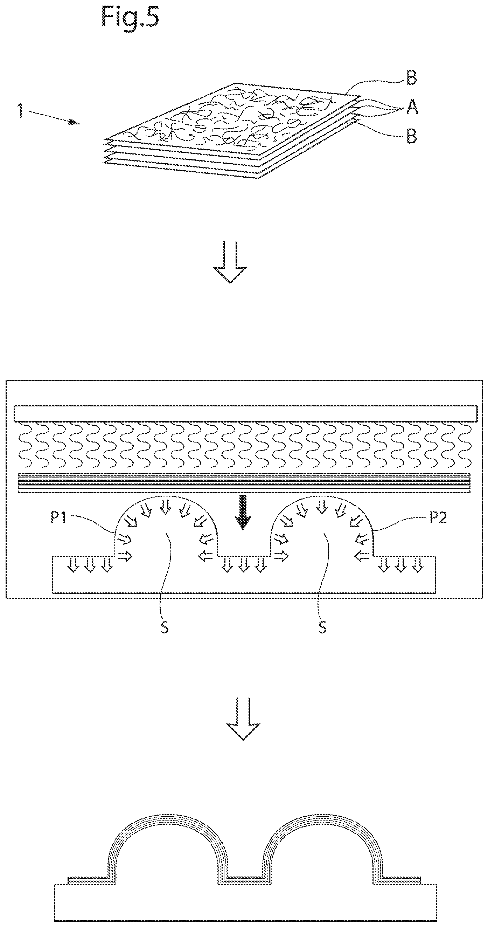

In figure 5 a third method of forming the friction decreasing sheet to fit a partly spherical object S is disclosed. Here a vacuum forming process is used. The sheet 1 is placed over a mould having at least one partly spherical protrusion P1, P2 and is pressed to drape the mould by a vacuum. When the sheet 1 is in place it is heated into a certain temperature. When using this method of forming the sheet, polyethylen foam is for example used as a support layer B, attached by for example gluing to the intermediate layer A.

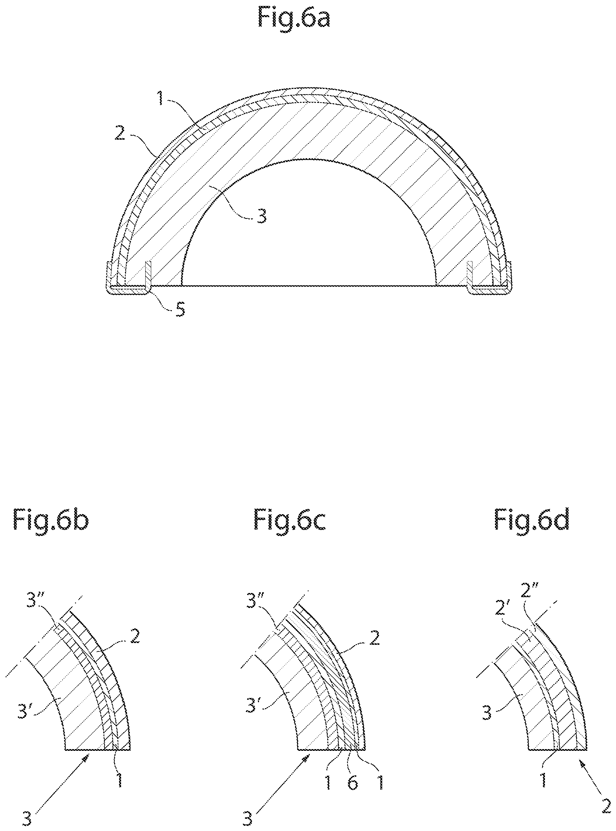

In one embodiment of the invention, the intermediate layer 1 is used in a protective helmet which is shown diagrammatically in figure 6a-6d. The helmet is constructed from an outer shell 2 and, arranged inside the latter, an inner shell or liner 3 which is intended for contact with the head of the wearer. Arranged between the outer shell 2 and the liner 3 is the intermediate layer of friction decreasing material 1, comprising one or several layers A, B, which makes possible displacement between the outer shell 2 and the liner 3.

The intermediate layer of friction decreasing material 1 might also comprise punched or by other method formed holes which are adapted to be placed essentially in line with ventilation holes in the outer shell 2 and the liner 3.

Arranged in the peripheral edge portion of the helmet may one or more connecting members 5 be provided which interconnect the outer shell 2 and the liner 3 and counteract mutual displacement between them by absorbing energy. As connecting members 5, use can be made of, for example, deformable strips of plastic or metal which are anchored in the outer shell and the inner shell in a suitable manner. It is also possible that the intermediate layer 1 is attached to both of the movable layers 2, 3 at a peripheral edge of the intermediate layer and that this connection is creating the interconnection between the outer shell 2 and the liner 3.

The outer shell 2 is relatively thin and strong so as to withstand impact of various types and can advantageously be made of, for example, fibre-reinforced plastic. The liner 3 is considerably thicker and is to be capable of damping or absorbing impacts against the head. It can advantageously be made of, for example, polyurethane foam or expanded polystyrene. The construction can be varied in different ways, which emerge below, with, for example, a number of layers of different materials.

The displacement between the outer shell 2 and the liner 3 can be created by an oblique impact K which gives rise to both a tangential force K_{T} and a radial force K_{R} against the protective helmet 1.

In addition to the embodiment shown in figure 6a, a number of other embodiments of the protective helmet 1 are also possible. A few possible variants are shown in figures 6b-d.

In figure 6b, the liner 3 is constructed from a harder, relatively thin outer layer 3" and a softer, relatively thick inner layer 3'. In figure 6c, the liner 3 is constructed in the same manner as in figure 6b. In this case, however, there are two sliding intermediate layers 1, between which there is an intermediate shell 6. The two sliding intermediate layers 1 can, if so desired, be embodied differently and made of different materials. One possibility, for example, is to have lower friction in the outer sliding intermediate layer than in the inner. In figure 6d, finally, the outer shell 2 is embodied differently to the previous. In this case, a harder outer layer 2" covers a softer inner layer 2'. The proportions of the thicknesses of the various layers have been exaggerated in the drawing for the sake of clarity and can of course be adapted according to need and requirements.

## Claims

1. A helmet comprising:
an outer layer (2) and an inner layer (3), wherein the outer and inner layers (2, 3) are moveable relative to each other; and
an intermediate layer (1) of friction decreasing material between the outer and inner layers (2, 3) configured to create a sliding movement between the outer and inner layers (2, 3) when a force (K) is applied and a tangential force component (K_{T}) shears the layers, wherein the friction decreasing material comprises fibers (F),
**characterised in that**
the fibres are treated with a low friction material, and
the low friction material is a silicon- or fluoro- polymer

2. The helmet of claim 1, wherein some or all of the fibers (F) are natural fibers or are polymer based.

3. The helmet of claim 2, wherein some or all of the polymer based fibers are thermoplastic.

4. The helmet according to either one of the above claims 1-3, wherein the fibers are bound together, creating a stabilized fiber material.

5. The helmet according to claim 4, wherein the fibers are bound together by web forming or are dry laid or are wet laid.

6. The helmet according to either one of the above claims 1-5, wherein the fibers are tied together, forming a non woven material or a wad or a carded felt.

7. The helmet according to according to claim 6, wherein the non-woven material is further processed by web bonding.

8. The helmet according to claim 6, wherein the fibers are welded together by heat or by ultrasound or by friction or by radio frequency or by a hot surface.

9. The helmet according to claim 6, wherein the fibers are glued together or are impregnated together.

10. The helmet according to either one of the above claims 4-9, wherein a support layer (B) is added to one or both sides of the intermediate layer (1, A).

11. The helmet according to claim 10, wherein the support layer (B) is a spun bond layer or a thermoplastic folio or a foam material.

12. The helmet according to either one of the above claims 1-11, wherein the intermediate layer (1) is attached to either one of the movable layers (2, 3) by an adhesive.

13. The helmet according to either one of the above claims 1-12, wherein the intermediate layer (1) is attached to both of the movable layers (2, 3) at a peripheral edge of the intermediate layer.

14. The helmet according to either one of the above claims 4-13, wherein some of the bonds between the fibers in the intermediate layer (1) or between either one of the movable layers (2, 3) and the intermediate layer (1) are adapted to break at a certain tangential force (K_{T}).

## Patentansprüche

1. Helm, umfassend:
eine äußere Schicht (2) und eine innere Schicht (3), wobei die äußere und die innere Schicht (2, 3) relativ zueinander beweglich sind; und
eine Zwischenschicht (1) aus reibungsverringerndem Material zwischen der äußeren und der inneren Schicht (2, 3), konfiguriert, um eine Gleitbewegung zwischen der äußeren und der inneren Schicht (2, 3) zu erzeugen, wenn eine Kraft (K) ausgeübt wird und eine Tangentialkraftkomponente (K_{T}) die Schichten schert, wobei das reibungsverringernde Material Fasern (F) umfasst,
**dadurch gekennzeichnet, dass**
die Fasern mit einem reibungsarmen Material behandelt sind und das reibungsarme Material ein Silicium- oder Fluorpolymer ist.

2. Helm nach Anspruch 1, wobei manche oder alle Fasern (F) Naturfasern oder auf Polymerbasis sind.

3. Helm nach Anspruch 2, wobei manche oder alle der Fasern auf Polymerbasis thermoplastisch sind.

4. Helm nach einem der obenstehenden Ansprüche 1-3, wobei die Fasern miteinander verbunden sind, wodurch ein stabilisiertes Fasermaterial erzeugt wird.

5. Helm nach Anspruch 4, wobei die Fasern durch Vliesbildung miteinander verbunden sind, oder trockengelegt oder nassgelegt sind.

6. Helm nach einem der obenstehenden Ansprüche 1-5, wobei die Fasern zusammengebunden sind, wodurch ein Vliesmaterial oder ein Bäuschchen oder ein kardierter Filz gebildet wird.

7. Helm nach Anspruch 6, wobei das Vliesmaterial durch Vliesverfestigung weiterverarbeitet wird.

8. Helm nach Anspruch 6, wobei die Fasern durch Hitze oder durch Ultraschall oder durch Reibung oder durch Hochfrequenz oder durch eine heiße Oberfläche zusammengeschweißt sind.

9. Helm nach Anspruch 6, wobei die Fasern zusammengeklebt sind oder zusammen imprägniert sind.

10. Helm nach einem der obenstehenden Ansprüche 4-9, wobei eine Trägerschicht (B) zu einer oder beiden Seiten der Zwischenschicht (1, A) hinzugefügt wird.

11. Helm nach Anspruch 10, wobei die Trägerschicht (B) eine Spinnvliesschicht oder eine thermoplastische Folie oder ein Schaumstoff ist.

12. Helm nach einem der obenstehenden Ansprüche 1-11, wobei die Zwischenschicht (1) an einer der beweglichen Schichten (2, 3) durch einen Klebstoff befestigt ist.

13. Helm nach einem der obenstehenden Ansprüche 1-12, wobei die Zwischenschicht (1) an beiden beweglichen Schichten (2, 3) an einer Umfangskante der Zwischenschicht befestigt ist.

14. Helm nach einem der oben stehenden Ansprüche 4-13, wobei manche der Bindungen zwischen den Fasern in der Zwischenschicht (1) oder zwischen einer der beweglichen Schichten (2, 3) und der Zwischenschicht (1) angepasst sind, um bei einer bestimmten Tangentialkraft (K_{T}) zu zerbrechen.

## Revendications

1. Casque comprenant :
une couche extérieure (2) et une couche intérieure (3), les couches extérieure et intérieure (2, 3) pouvant être déplacées l'une par rapport à l'autre ; et
une couche intermédiaire (1) de matériau de réduction de frottement entre les couches extérieure et intérieure (2, 3) conçue pour créer un mouvement de coulissement entre les couches extérieure et intérieure (2, 3) lorsqu'une force (K) est appliquée et une composante de force tangentielle (K_{T}) coupe les couches, le matériau de réduction de frottement comprenant des fibres (F),
**caractérisé en ce que**
les fibres sont traitées avec un matériau à faible frottement et le matériau à faible frottement est un polymère de silicium ou fluoré.

2. Casque selon la revendication 1, dans lequel une partie ou la totalité des fibres (F) sont des fibres naturelles ou sont à base d'un polymère.

3. Casque selon la revendication 2, dans lequel une partie ou la totalité des fibres à base d'un polymère sont thermoplastiques.

4. Casque selon l'une quelconque des revendications 1 à 3 ci-dessus, dans lequel les fibres sont liées ensemble, créant un matériau de fibres stabilisées.

5. Casque selon la revendication 4, dans lequel les fibres sont liées ensemble par la formation de bande ou sont posées sèches ou sont posées mouillées.

6. Casque selon l'une quelconque des revendications 1 à 5 ci-dessus, dans lequel les fibres sont liées ensemble, formant un matériau non tissé ou une liasse ou un feutre cardé.

7. Casque selon la revendication 6, dans lequel le matériau non tissé est en outre traité par la liaison entre les fibres.

8. Casque selon la revendication 6, dans lequel les fibres sont soudées ensemble par la chaleur ou par ultrason ou par frottement ou par radiofréquence ou par une surface chaude.

9. Casque selon la revendication 6, dans lequel les fibres sont collées ensemble ou sont imprégnées ensemble.

10. Casque selon l'une quelconque des revendications 4 à 9 ci-dessus, dans lequel une couche de support (B) est ajoutée à un côté ou aux deux côtés de la couche intermédiaire (1, A).

11. Casque selon la revendication 10, dans lequel la couche de support (B) est une couche filée-liée ou une feuille thermoplastique ou un matériau en mousse.

12. Casque selon l'une quelconque des revendications 1 à 11 ci-dessus, dans lequel la couche intermédiaire (1) est attachée à l'une ou l'autre des couches mobiles (2, 3) par un adhésif.

13. Casque selon l'une quelconque des revendications 1 à 12 ci-dessus, dans lequel la couche intermédiaire (1) est attachée aux deux couches mobiles (2, 3) au niveau d'un bord périphérique de la couche intermédiaire.

14. Casque selon l'une quelconque des revendications 4 à 13 ci-dessus, dans lequel une partie des liaisons entre les fibres dans la couche intermédiaire (1) ou entre l'une ou l'autre des couches mobiles (2, 3) et la couche intermédiaire (1) sont conçues pour se casser à une certaine force tangentielle (K_{T}).
